# EUROPEAN PATENT SPECIFICATION

(11) **EP 2 619 033 B1**
(45) Date of publication and mention of the grant of the patent: **03.07.2019**
(21) Application number: 10775915.1
(22) Date of filing: 22.09.2010
(51) Int. Cl.: B60P 1/00, B60P 3/08, B60R 3/00

(54) **FALL-PREVENTING SYSTEM, PARTICULARLY FOR VEHICLE- TRANSPORTING TRUCKS**
FALLSCHUTZSYSTEM, IM BESONDEREN FÜR AUTOTRANSPORTLASTER
SYSTÈME DE PROTECTION CONTRE LES CHUTES, EN PARTICULIER POUR DES CAMIONS DE TRANSPORT DE VÉHICULE

(43) Date of publication of application: 31.07.2013
(73) Proprietor: Rolfo S.p.A., 12042 Bra (CN) (IT)
(72) Inventor: ARNULFO, Elio, 12042 Bra (CN) (IT)
(74) Representative: Garavelli, Paolo
(86) International application number: PCT/IT2010/000402
(87) International publication number: WO 2012/038992

(56) References cited:
- WO-A1-2008/117065
- WO-A1-2012/014144
- CA-A1- 2 410 135
- DE-U1-202006 000 455
- GB-A- 2 465 255
- US-A1- 2010 230 210

## Description

The present invention refers to a fall-preventing system, particularly aimed to prevent the fall of people operating on high loading planes of motor vehicles aimed form transporting vehicles (vehicle-transporting trucks).

Document US 2010/0230210 A1 is considered to be the prior art closest to the subject-matter of claim 1. Document WO 2012/014144 A1 is cited as prior art pursuant to Art. 54(3) EPC.

As known, some vehicles, such as car or vans, are commonly transported on road by means of motor vehicles (vehicle-transporting trucks) equipped with one or more loading planes. Generally, such motor vehicles comprise a lower loading plane and an upper loading plane, usually arranged at a height from the road plane higher than 2 m. It is therefore clear that there is a mandatory need of preventing falls, particularly from the upper loading plane, of operators responsible for loading and unloading vehicles to and from the vehicle-transporting trucks. Since there are no standard references shared and common in the various Countries, the various manufacturers of vehicle-transporting trucks have adopted different solutions, all suitable for making fall-preventing protections for people operating on the upper loading planes of the vehicle-transporting trucks. Such solutions are aimed to make a side barrier similar to a guard, and their common feature is that they are generally made with vertical posts fastened at the side end of the upper loading planes, connected by many ropes horizontally stretched between the posts themselves.

Such fall-preventing systems however have some inconveniences: in fact, taking into account that the maximum width of motor vehicles circulating on roads, including vehicle-transporting trucks, is imposed by the regulations about road circulation, it is understood how, in case of loading and unloading cars whose width is particularly large or vans, on the loading planes, the presence of lateral fall-preventing systems makes sometimes difficult, if not impossible, to open the doors or makes extremely small the side space remaining between loaded vehicles and guards, so that the passage of operators is not allowed. Moreover, the presence of fixed lateral protections on loading planes can sometimes create damages to doors in case of their careless opening.

The art has therefore proposed some solutions that allow widening the fall-preventing protections in order to increase the lateral width of the loading planes during vehicle loading and unloading operations: such solutions substantially comprise the adoption of guards composed of posts or risers removable from their own bases or rotating around a vertical axis on their own base in order to reach a position with minimum side encumbrances. Such solutions, however, though allowing to increase the lateral space on the loading plane, greatly decrease the fall-preventing protection for operators in the exact time when it is most needed, namely during motor vehicle loading and unloading operations.

Moreover, the above known solutions are, for the operators, scarcely practical and long to be used: in fact, before loading or unloading the motor vehicles, all posts must be removed or turned to increase the width of the loading plane, to be then taken back to their original protection position, thereby highly increasing the global length of handling activities of motor vehicles from the vehicle-transporting trucks.

Therefore, object of the present invention is solving the above prior art problems by providing a fall-preventing system, particularly for vehicle-transporting trucks, that allows widening the lateral space of the loading planes for motor vehicles without decreasing the offered level of protection.

Another object of the present invention is providing a fall-preventing system that can be easily and quickly actuated.

The above and other objects and advantages of the invention, as will appear from the following description, are obtained with a fall-preventing system, particularly for vehicle-transporting trucks as claimed in claim 1. Preferred embodiments and non-trivial variations of the present invention are the subject matter of the dependent claims.

It will be immediately obvious that numerous variations and modifications (for example related to shape, sizes, arrangements and parts with equivalent functionality) can be made to what is described without departing from the scope of the invention as appears in the enclosed claims.

The present invention will be better described by some preferred embodiments thereof, provided as a nonlimiting example, with reference to the enclosed drawings, in which:
- Figure 1 shows a perspective view of a loading plane of a vehicle-transporting truck equipped with a preferred embodiment of the fall-preventing system according to the present invention;
- Figure 2a shows a top view of the loading plane of Figure 1 in which the fall-preventing system is in a first operating position thereof;
- Figure 2b shows a top view of the loading plane of Figure 1 in which the fall-preventing system is in a second operating position thereof;
- Figure 3a shows a front view of the loading plane of Figure 1 in which the fall-preventing system is in the first operating position thereof;
- Figure 3b shows a front view of the loading plane of Figure 1 in which the fall-preventing system is in the second operating position thereof;
- Figure 4 shows an enlarged side perspective view of the part of the fall-preventing system according to the present invention in box A of Figure 1; and
- Figure 5 shows an enlarged front view of the part of the fall-preventing system according to the present invention in box B of Figure 3b.

With reference to the Figures, it is possible to note that the fall-preventing system 1 according to the present invention, particularly for a loading plane 3 of a vehicle-transporting truck, comprises at least one guard-type structure 5 integral with at least one base 7, such base 7 being connected articulated to an edge 9 of such loading plane 3 by interposing at least one articulated spacing kinematism 11.

The articulated spacing kinematism 11 is then adapted to allow the movement of the guard-type structure 5 with respect to the loading plane 3 between a first operating position in which the guard-type structure 5 is substantially adhering to such loading plane 3, and particularly in order to confer to such loading plane a regulatory running width in compliance with the requirements of the regulations about road circulation, and a second operating position in which the guard-type structure 5 is spaced from such loading plane 3, particularly to make it easier to perform the loading and unloading operations of motor vehicles to and from such loading plane 3, the opening of the doors and the passage of operators between the guard-type structure 5 and the motor vehicles being present on the plane 3 itself.

Preferably, as can be noted in the Figures, the loading plane 3 is equipped on each one of its opposite side edges with a fall-preventing system 1 according to the present invention.

Preferably, each guard-type structure 5 is composed of at least two vertical risers or posts 13 connected to the base 7 between which horizontal holding cables 15 are subtended, or a single cable suitably extended in many sections, as already known in the art. Obviously, the number of posts 13 and the length and the number of cables 15 composing the guard-type structure 5 is variable and function, substantially, of the length of the loading plane 3 to be protected by the system 1 according to the present invention. Merely as an example, the Figures show a preferred embodiment of a fall-preventing system 1 in which each guard-type structure 5 is composed of three posts 13 between which a single cable 15 is subtended, extended in order to form four horizontal sections.

Advantageously, each articulated spacing kinematism 11 is composed of at least one transmission arm 19 having a first end 19a connected articulated, for example by interposing a first hinge kinematism 21 or at least one rotation pin, to the related edge 9 of the loading plane 3, and a second end 19b also connected articulated, for example by interposing a second hinge kinematism 23 or at least one rotation pin, to the base 7 of the guard-type structure 5.

In addition, each fall-preventing system 1 according to the present invention can comprise at least one locking device 25, for example made through at least one spring-type latch of the prior art, like the one shown in the Figures, suitable to lock the guard-type structure at least in the first operating position: by acting on the device 25, it is possible to unlock the system 1 allowing the movement towards the second operating position. Eventually, it is possible to provide that the same device 25, or a further and different locking device, takes care of locking the guard-type structure also in the second operating position.

Obviously, the length of the transmission arm 19 defines the maximum spacing that can be obtained for the base 7 and, consequently, for the guard-type structure 5, from the edge 9 when the fall-preventing system 1 according to the present invention is in the second operating position.

Also in this case, obviously, the number of different articulated kinematisms 11 that connect the base 7 of the guard-type structure to the related edge 9 of the loading plane 3 is variable and substantially function of the length of the loading plane 3 to be protected by the system 1 according to the present invention. Particularly, it must be noted that, if in a not-shown embodiment of the fall-preventing system 1 according to the present invention, it comprised a single articulated kinematism 11 connected to a base 7 integral with a single post 13, it could allow taking the guard-type structure 5 to the second operating position of the system 1 according to the present invention by spacing from the edge 9 of the loading plane 3 such single post 13, allowing, for example, to an operator to widen such loading plane 3 only next to a particular motor vehicle being present on the plane 3.

Alternatively, it must be noted that another not-shown embodiment of the fall-preventing system 1 according to the present invention could comprise a single articulated kinematism 11 connected to a first end of the base 7 integral with two or more posts 13, such base having a second end opposite to the first and connected to the edge 9 by interposing a suitably holed hinge kinematism: in such case, the fall-preventing system 1 according to the present invention would allow taking the guard-type structure 5 to the second operating position of the system 1 with a maximum spacing from the edge 9 of the loading plane 3 next to the first end of the base 7 and progressively decreasing when proceeding towards the second end.

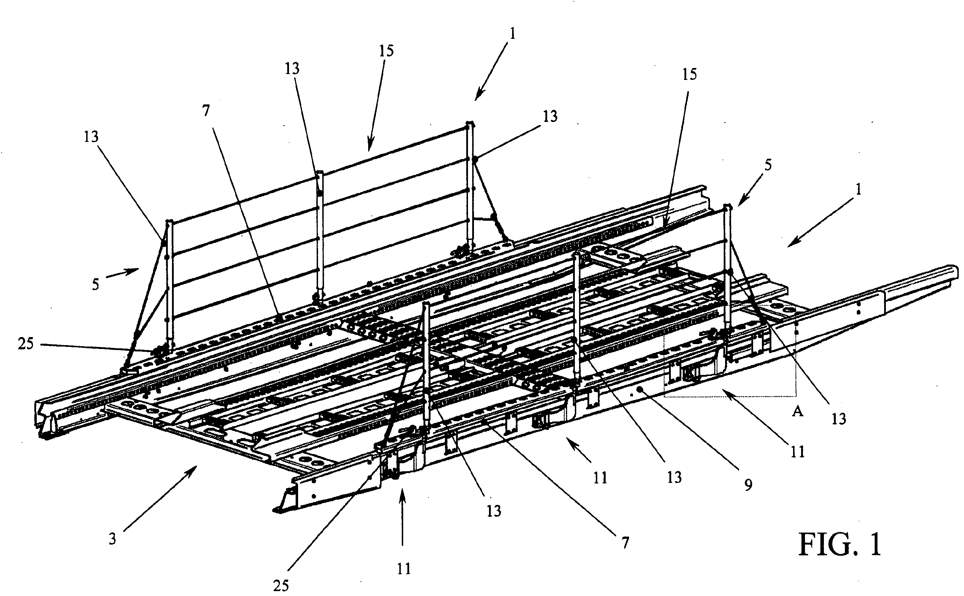

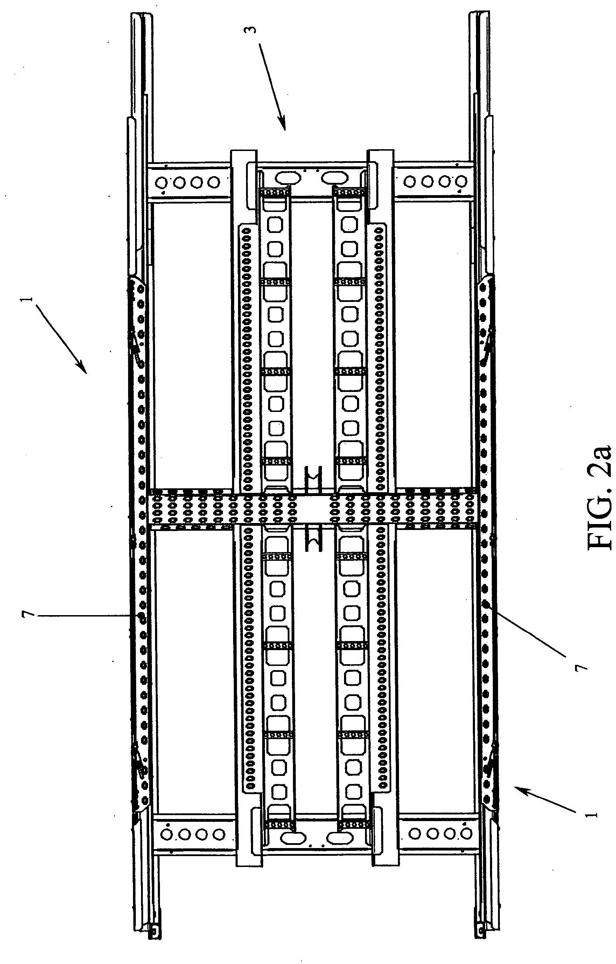

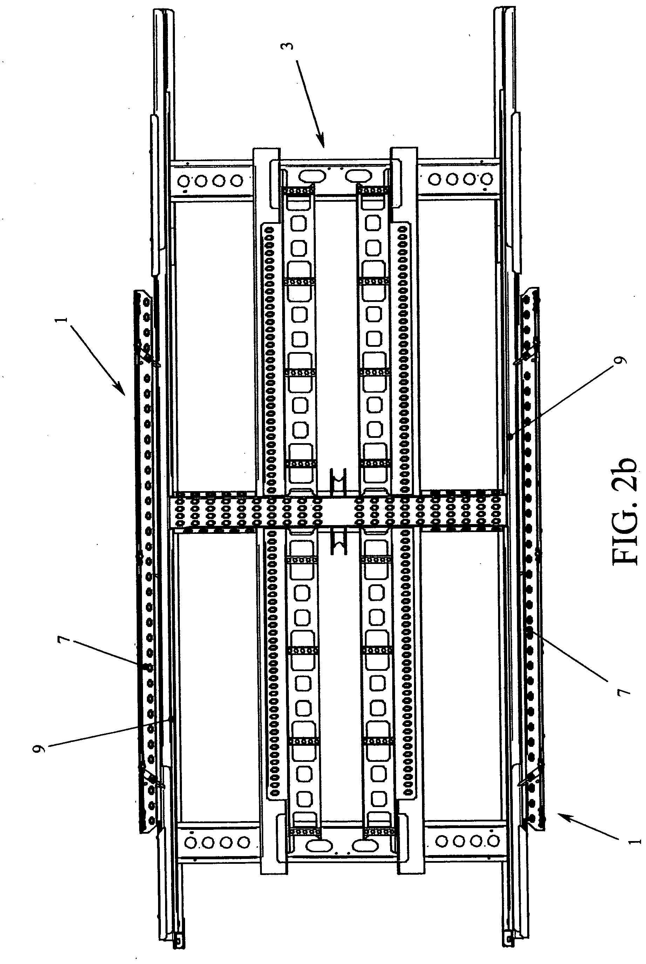

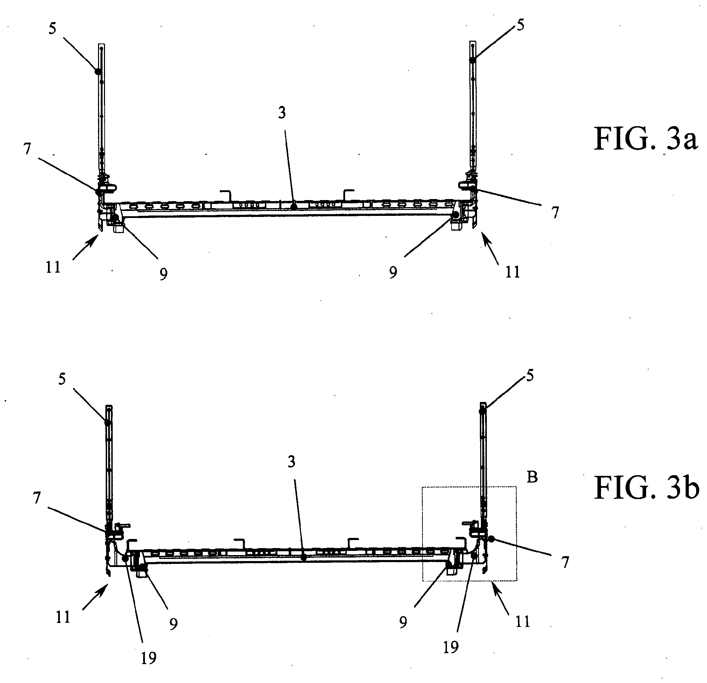

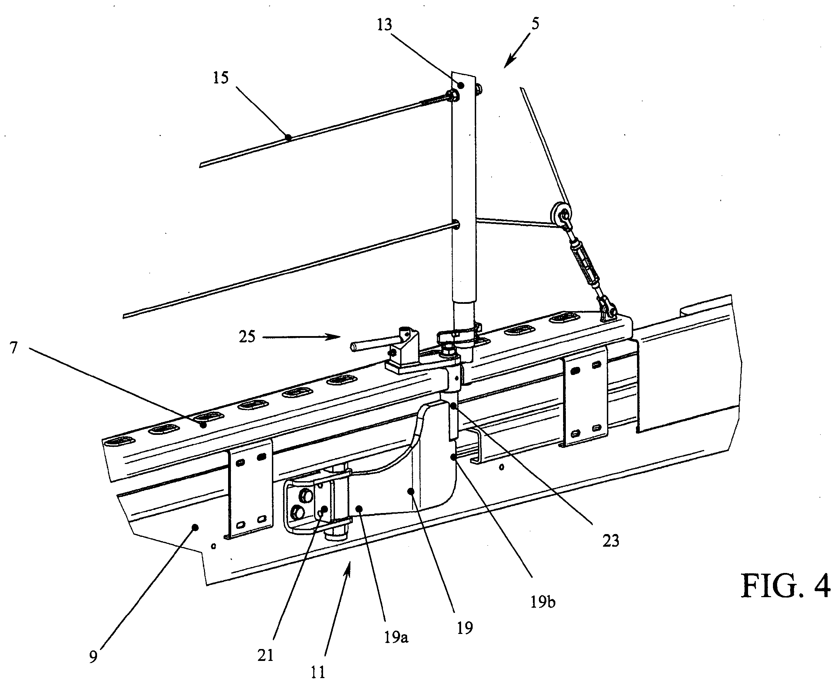

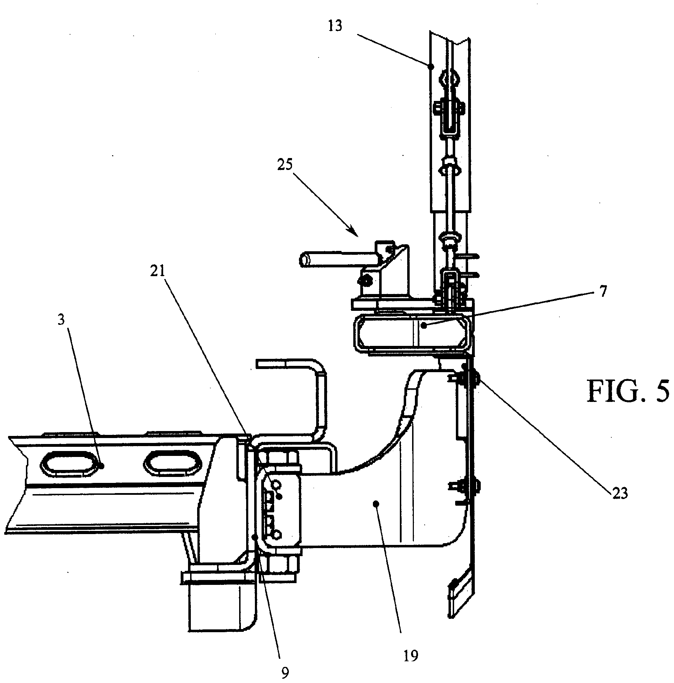

In a further preferred alternative like the one shown in the Figures, the fall-preventing system 1 according to the present invention comprises at least two articulated kinematisms 11 connected to the base 7 integral with two or more posts 13 and suitably spaced (for example arranged one next to a first end of the base 7 and one next to its opposite end): in such case, the fall-preventing system 1 according to the present invention allows taking the guard-type structure 5 from the first operating position, like the one shown for example in Figures 1, 2a, 3a and 4, to the second operating position of the system 1, like the one shown for example in Figures 2b, 3b and 5, and vice versa through an articulated parallelogram movement. Obviously, if the lengths of the transmission arms 19 of each articulated kinematism 11 are mutually equal, during the articulated parallelogram movement of the guard-type structure 5 to pass from the first operating position, like the one shown for example in Figures 1, 2a, 3a and 4, to the second operating position of the system 1, like the one shown for example in Figures 2b, 3b and 5, and vice versa, the base 7 always remains substantially parallel to the edge 9 of the loading plane 3: obviously, in case of a fall-preventing system 1 according to the present invention having a number of articulated kinematisms 11 greater than 3, in order to allow the articulated parallelogram movement of the guard-type structure 5, all transmission arms 19 must necessarily have the same length.

Merely as an example, the Figures show a preferred embodiment of the fall-preventing system 1 in which each guard-type structure 5 is connected to the related edge 9 by interposing three articulated kinematisms 11, each one of which being preferably arranged next to one of such posts 13 and suitable at the same distance.

In addition, each fall-preventing system 1 according to the present invention can comprise at least one actuating device (not shown) that allows taking the guard-type structure 5 from the first operating position to the second operating position of the system 1, using elastic, electric, electromagnetic, pneumatic or hydraulic potential energy.

## Claims

1. Fall-preventing system (1) for a loading plane (3) of, in particular, a vehicle-transporting truck, said fall-preventing system (1) comprising at least one guard-type structure (5) integral with at least one base (7), said base (7) being connected articulated to an edge (9) of said loading plane (3) by interposing at least one articulated spacing kinematism (11), said articulated spacing kinematism (11) being adapted to allow a movement of said guard-type structure (5) with respect to said loading plane (3) between a first operating position in which said guard-type structure (5) is substantially adhering to said loading plane (3) and a second operating position in which said guard-type structure (5) is spaced from said loading plane (3), **characterised in that** said articulated spacing kinematism (11) is composed of at least one transmission arm (19) having a first end (19a) connected articulated (21) to said edge (9) of said loading plane (3), and a second end (19b) connected articulated (23) to said base (7) of said guard-type structure (5), said guard-type structure (5) being composed of at least two vertical risers or posts (13) connected to said base (5) between which horizontal holding cables (15) are subtended or a single cable suitably extended in many sections, whereby the fall-preventing system (1) comprises at least one locking device (25) for said articulated spacing mechanism (11) adapted to lock said guard-type structure at least in said first operating position, and whereby the fall-preventing system (1) comprises a single articulated kinematism (11) connected to a first end of said base (7) integral to two or more of said posts (13), said base (7) having a second end opposite to said first end connected to said edge (9) by interposing a holed hinge kinematism.

2. Fall-preventing system (1) according to claim 1, **characterised in that** it comprises at least two of said articulated kinematisms (11) connected to said base (7) integral with two or more of said posts (13), said guard-type structure (5) passing from said first operating position to said second operating position and vice versa through an articulated parallelogram movement.

3. Fall-preventing system (1) according to any one of the previous claims, **characterised in that** it further comprises at least one actuating device adapted to take said guard-type structure (5) from the first operating position to the second operating position of the system (1), by using elastic, electric, electromagnetic, pneumatic or hydraulic potential energy.

## Patentansprüche

1. Fallschutzsystem (1) für eine Ladefläche (3), insbesondere eines Autotransportfahrzeuges, das genannte Fallschutzsystem (1) enthält mindestens eine Geländerstruktur (5), die einteilig mit mindestens einer Basis (7) ist, die genannte Basis (7) ist gelenkig mit einer Kante (9) der genannten Ladefläche (3) durch Einfügen von mindestens einem Abstandsregelungsmechanismus (11) verbunden, der genannte Abstandsregelungsmechanismus (11) dient dazu, eine Bewegung der genannten Geländerstruktur (5) gegenüber der genannten Ladefläche (3) zwischen einer ersten Betriebsposition, in der die genannte Geländerstruktur (5) grundlegend an der genannten Ladefläche (3) anliegt, und einer zweiten Betriebsposition, in der die genannte Geländerstruktur (5) von der genannten Ladefläche (3) entfernt ist, zu ermöglichen,
und ist **dadurch gekennzeichnet, dass** der genannte Abstandsregelungsmechanismus (11) aus mindestens einem Umlenkarm (19) besteht, der ein erstes Ende (19a) hat, das gelenkig (21) mit der genannten Kante (9) der genannten Ladefläche (3) verbunden ist, und ein zweites Ende (19b), das gelenkig (23) mit der genannten Basis (7) der genannten Geländerstruktur (5) verbunden ist, die genannte Geländerstruktur (5) besteht aus mindestens zwei vertikalen Pfosten oder Pflöcken (13), die mit der genannten Basis (5) verbunden sind, zwischen denen horizontale Haltebänder (15) oder nur ein Band, das entsprechend in mehreren Abständen verschoben ist, unterspannt sind, daher enthält das Fallschutzsystem (1) mindestens eine Blockiervorrichtung (25) für den genannten Abstandsregelungsmechanismus (11), die dazu dient, die genannte Geländerstruktur mindestens in der genannten ersten Betriebsposition zu blockieren, in der das Fallschutzsystem (1) nur einen Gelenkmechanismus (11) enthält, der mit einem ersten Ende der genannten Basis (7) verbunden ist, die einteilig mit zwei oder mehreren der genannten Pflöcke (13) ist, die genannte Basis (7) hat ein zweites Ende gegenüber dem genannten ersten Ende, das mit der genannten Kante (9) durch Einfügen eines Scharnierösenmechanismus verbunden ist.

2. Fallschutzsystem (1) gemäß Patentanspruch 1, das **dadurch gekennzeichnet ist, dass** es mindestens zwei der genannten Gelenkmechanismen (11) enthält, die mit der genannten Basis (7) verbunden sind, die einteilig mit zwei oder mehreren der genannten Pflöcke (13) ist, die genannte Geländerstruktur (5) wechselt durch eine Parallelogrammbewegung von der genannten ersten Betriebsposition auf die genannte zweite Betriebsposition und umgekehrt.

3. Fallschutzsystem (1) gemäß einem beliebigen der vorhergehenden Patentansprüche, das **dadurch gekennzeichnet, dass** es außerdem mindestens eine Antriebsvorrichtung enthält, die dazu dient, die genannte Geländerstruktur (5) von der ersten Betriebsposition auf die zweite Betriebsposition des Systems (1) zu führen, wobei sie elastische potenzielle, elektrische, elektromagnetische, pneumatische oder hydraulische Energie verwendet.

## Revendications

1. Système antichute (1) pour un plan de chargement (3), en particulier d'un camion de transport de véhicules, comprenant au moins une structure garde-corps (5) solidaire d'une base (7), cette dernière étant reliée de manière articulée à un bord (9) du plan de chargement (3) à travers l'interposition au moins d'un cinématisme articulé d'espacement (11) qui est apte à permettre un mouvement de la structure garde-corps (5) par rapport au plan de chargement (3) entre une première position de fonctionnement où la structure garde-corps (5) est substantiellement adhérente au plan de chargement (3) et une seconde position de fonctionnement où la structure garde-corps (5) est distancée du plan de chargement (3),
**caractérisé en ce que** le cinématisme articulé d'espacement (11) est composé au moins d'un bras de renvoi (19) ayant une première extrémité (19a) reliée de manière articulée (21) au bord (9) du plan de chargement (3), et une seconde extrémité (19b) reliée de manière articulée (23) à la base (7) de la structure garde-corps (5) ; la structure garde-corps (5) est composée au moins de deux montants verticaux ou piquets (13) reliés à la base (5) entre lesquels sont tendus des câbles de retenue horizontaux (15) ou un seul câble dûment raccordé en plusieurs tronçons, où le système antichute (1) comprend au moins un dispositif de blocage (25) du mécanisme articulé d'espacement (11) apte à bloquer la structure garde-corps au moins dans la première position de fonctionnement, et où le système antichute (1) comprend un seul cinématisme articulé (11) relié à la première extrémité de la base (7) qui est solidaire de deux ou plusieurs piquets (13) ; la base (7) possède une seconde extrémité opposée à la première extrémité qui est reliée au bord (9) à travers l'interposition d'un cinématisme à charnière ajourée.

2. Système antichute (1), selon la revendication 1, **caractérisé en ce qu'**il comprend au moins deux cinématisme articulés (11) reliés à la base (7) solidaire de deux ou plusieurs piquets (13) ; la structure garde-corps (5) passe par la première position de fonctionnement et inversement à travers un mouvement à parallélogramme articulé.

3. Système antichute (1), selon l'une des revendications précédentes, **caractérisé en ce qu'**il comprend par ailleurs au moins un dispositif actionneur apte à déplacer la structure garde-corps (5) de la première position de fonctionnement à la seconde position de fonctionnement du système (1), en utilisant l'énergie potentielle élastique, électromagnétique, pneumatique ou hydraulique.
